(19) **Europäisches Patentamt**

**European Patent Office**

**Office européen des brevets**

(11) Veröffentlichungsnummer : **0 329 601 B1**

(12) **EUROPÄISCHE PATENTSCHRIFT**

(45) Veröffentlichungstag der Patentschrift :
**02.01.92 Patentblatt 92/01**

(21) Anmeldenummer : **89810021.9**

(22) Anmeldetag : **11.01.89**

(51) Int. Cl.$^5$ : **C02F 1/20,** B01D 19/00,
B01D 53/14

(54) **Verfahren und Anlage zur Entfernung von gelöstem Sauerstoff aus chloriertem Wasser, insbesondere von Meerwasser, mittels eines sauerstoffarmen Stripgases.**

(30) Priorität : **18.02.88 CH 592/88**

(43) Veröffentlichungstag der Anmeldung :
**23.08.89 Patentblatt 89/34**

(45) Bekanntmachung des Hinweises auf die
Patenterteilung :
**02.01.92 Patentblatt 92/01**

(84) Benannte Vertragsstaaten :
**DE ES FR GB IT NL**

(56) Entgegenhaltungen :
**EP-A- 0 234 771**

(56) Entgegenhaltungen :
**CH-A- 662 803**
**FR-A- 2 264 772**
**US-A- 4 460 552**
**US-A- 4 530 820**

(73) Patentinhaber : **GEBRÜDER SULZER
AKTIENGESELLSCHAFT
Zürcherstrasse 9
CH-8401 Winterthur (CH)**

(72) Erfinder : **Mandrin, Charles, Dr.
Im Laubegg 7
CH-8406 Winterthur (CH)**
Erfinder : **Keller, René
Müliwiesstrasse 49
CH-8487 Zell (CH)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zum Desoxidieren von chloriertem Wasser, insbesondere von Meerwasser, mittels eines sauerstoffarmen Stripgases, welches, nachdem es mit dem Wasser in Kontakt gebracht worden ist, mit Hilfe eines flüssigen Absorptionsmittels entchlort wird.

Es ist bekannt, Oel aus Oelfeldern bzw. Oelquellen mittels Druckgas oder Druckwasser auszupressen. Häufig befinden sich derartige Oelreserven unterhalb des Meeresgrundes. Das Oel wird in diesen Fällen insbesondere mit Hilfe von Anlagen, die auf künstlichen Inseln, sogenannten Plattformen, gegebenenfalls aber auch auf Schiffen montiert sein können, gewonnen.

Natürliches Meerwasser enthält ca. 10 ppm gelösten Sauerstoff, entsprechend dem Partialdruck des Sauerstoffes in der Atmosphäre. Da dieser Sauerstoffgehalt des Meerwassers für den vorstehend genannten Verwendungszweck unzulässig hoch ist, insbesondere wegen der durch ihn bewirkten äusserst aggressiven Korrosion der Anlagenteile und Leitungen, aber auch wegen einer Verstopfungsgefahr durch sich bei diesem Sauerstoffgehalt in grossem Masse entwickelnden Algen, ist es erforderlich, das benötigte Meerwasser weitgehend, d.h. bis mindestens auf 20 ppb Sauerstoffgehalt zu desoxidieren.

Verfahren und Anlagen zum Desoxidieren von Wasser, insbesondere Meerwasser sind beispielsweise in der US-PS-4530820 und in dem schweizerischen Patentgesuch 00287/88-8 beschrieben.

In beiden Fällen soll mit Hilfe eines weitgehend sauerstofffreien Stripgases der im Wasser gelöste $O_2$ entfernt werden.

Die Abtrennung des im Wasser enthaltenen Sauerstoffes wird vorgenommen, um das Wachstum von aerobischen Algen zu unterbinden. Weiterhin wird zu dem gleichen Zweck ein Chlorierungsmittel, häufig NaOCl im Wasser gelöst. Die desinfizierende Wirkung wird durch Chlor, das aus einer spontanen Zersetzung des Chlorierungsmittels entsteht, erreicht.

Gase, die mit derart chloriertem Wasser in Kontakt gebracht werden, enthalten üblicherweise nicht mehr als 0,5 ppm Chlor. Dieses entspricht dem gesetzlich vorgeschriebenen Mak-Wert, entsprechend dem für Menschen tolerierbaren, zulässigen Chlorgehalt von Gasen.

Bei den in der zitierten US-PS und dem schweizerischen Patentgesuch beschriebenen Verfahren bzw. Anlagen, soll der vom Stripgas aus dem Wasser aufgenommene $O_2$ katalytisch entfernt und das so regenerierte Stripgas wieder erneut mit Wasser in Kontakt gebracht werden.

Das mit $O_2$ beladene Stripgas ist ausserdem chlorhaltig, da es während seines Kontaktes mit chloriertem Wasser aufgrund der Zersetzung des Chlorierungsmittels ebenfalls chloriert worden ist.

Nun sind aber Edelmetallkatalysatoren, die für die $O_2$-Entfernung geeignet sind, äusserst chlorempfindlich. So wird beispielsweise Palladium nach kurzer Zeit inaktiv.

Es ist zwar bekannt, aus einem chlorhaltigem Gas Chlor mit einer stark alkalischen Lösung, z.B. Natronlauge auszuwaschen. Jedoch ist eine solche Wäsche mit einem sehr hohen Chemikalienverbrauch verbunden, insbesondere, wenn das Stripgas Kohlendioxid enthält. Kohlendioxid reagiert auch stark mit Natronlauge und allen anderen stark alkalischen Lösungen, wie z.B. Kaliumlauge. Die Kohlendioxid-Konzentration ist um Faktoren höher als die Chlor-Konzentration in mit Chlor und Sauerstoff beladenen Stripgas.

Beispielsweise würde eine typische Injektionsanlage ca. 50 kg/Jahr Natronlauge verbrauchen, um Chlor zu absorbieren und 50 t/Jahr Natronlauge würden nutzlos zerstört, aufgrund der Reaktion mit Kohlendioxid.

Insbesondere auf Schiffen und Bohrinseln wäre der jährliche Vorrat von 50 t Natronlauge (bei einer 30-%igen Lösung entsprechend 150 t) aus Platz- und Gewichtsgründen nicht tolerierbar. Im Vergleich hierzu hat eine vollständige Injektionsanlage, die Wasserfilter, Desoxidierungseinrichtungen und Hochdruckpumpen etc. aufweist, nur ein Gewicht von ca. 100 bis 200 t.

Falls Wasserstoff als Brennstoff bei einer katalytischen Verbrennung verwendet wird, enthält das zirkulierende Stripgas kein Kohlendioxid und der Verbrauch an Natronlauge würde an sich innerhalb annehmbarer Grenzen bleiben. Jedoch wird in der Kontaktvorrichtung für Meerwasser und Stripgas eine Entchlorierung des Meerwassers bewirkt, da der Chlorpartialdruck des Stripgases am Eintritt in die Vorrichtung null ist, falls keine Massnahmen getroffen werden. Dieses fördert die Zersetzung des Chlorierungsmittels (z.B. NaOCl) und erhöht somit die Chlorkonzentration im Stripgas am Austritt der Kontaktvorrichtung. Somit wird auch die desinfizierende Wirkung im injizierten Wasser vermindert. Die vorstehenden Erläuterungen beziehen sich auf Desoxidierungsverfahren, bei welchen das Stripgas einen geschlossenen Kreislauf durchläuft (vergl. die zitierte US-PS und das schweizerische Patentgesuch).

Jedoch tauchen die gleichen Probleme auch dann auf, wenn das Stripgas keinen geschlossenen Kreislauf durchläuft, sondern aus einer fremden Quelle stammt und, nachdem es mit Sauerstoff beladen ist, auf irgend eine Weise ohne Rezirkulation entsorgt oder rekuperiert wird. Die Erfindung kann auch in diesen Fällen angewendet werden, da auch hier Probleme durch Chlorierung und Entchlorierung entstehen.

Aus wirtschaftlichen Gründen wird man in diesen Fällen als Stripgas stets Erdgas verwenden. Bekanntlich ist Erdgas chlorfrei. Jedoch wird es bei der Kontaktierung mit chloriertem Wasser aus den vorstehend beschriebenen Gründen chloriert, und zwar wegen der Zersetzung des Chlorierungsmittels des Wassers. Das mit Chlor und Sauerstoff beladene Erdgas, das immer auch Kohlendioxid enthält, kann, nachdem es mit Wasser in Kontakt gebracht worden ist, aus wirtschaftlichen und/oder Sicherheits- und Vorschriftsgründen meistens nicht abgefackelt werden. Es bleiben dann mehrere Rückgewinnungsmöglichkeiten für das Erdgas übrig.

Die eine Möglichkeit besteht darin, das Erdgas mit einem separaten Kompressor in die Brennkammer einer Gasturbine zu fördern. Jedoch korrodiert das Chlor die warmen Teile der Gasturbine und muss daher vorher selektiv entfernt werden. Der Sauerstoff braucht in diesem Fall nicht abgetrennt zu werden.

Eine andere Möglichkeit besteht darin, das Gas mit einem vorhandenen Kompressor in ein Bohrloch zu injizieren (Gasinjektion) oder aber in eine Pipeline einzuspeisen, die zu einem Verbraucher führt. Auch für eine solche Rückgewinnung ist die Entfernung von Chlor aus dem Erdgas in jedem Fall erforderlich.

Der Erfindung liegt die Aufgabe zugrunde, bei einer Desoxidierung von chloriertem Wasser, insbesondere Meerwasser, das hierbei chlorierte Stripgas auf wirtschaftliche Weise zu entchloren und weiterhin, die Chlorverluste des chlorierten Wassers bei der Kontaktierung mit Stripgas möglichst gering zu halten. Diese Aufgabe wird erfindungsgemäss durch die im Kennzeichen des Anspruchs 1 angegebenen Massnahmen gelöst.

Vorteilhafte Ausführungsformen bzw. Weiterbildungen der Erfindung sind in den Kennzeichen der Ansprüche 2 bis 4 definiert.

Die Erfindung wird anhand von in der Zeichnung schematisch dargestellten Ausführungsformen erläutert.

Die Fig. 1 zeigt ein Fliesschema für eine Anlage, in welcher das Stripgas einen geschlossenen Kreislauf durchläuft, während in der Fig. 2 ein Fliesschema für eine Anlage dargestellt ist, in welcher das Stripgas in einem offenen Kreislauf geführt wird.

Die Fig. 3 zeigt eine modifizierte Ausführung der Anlage nach Fig. 1.

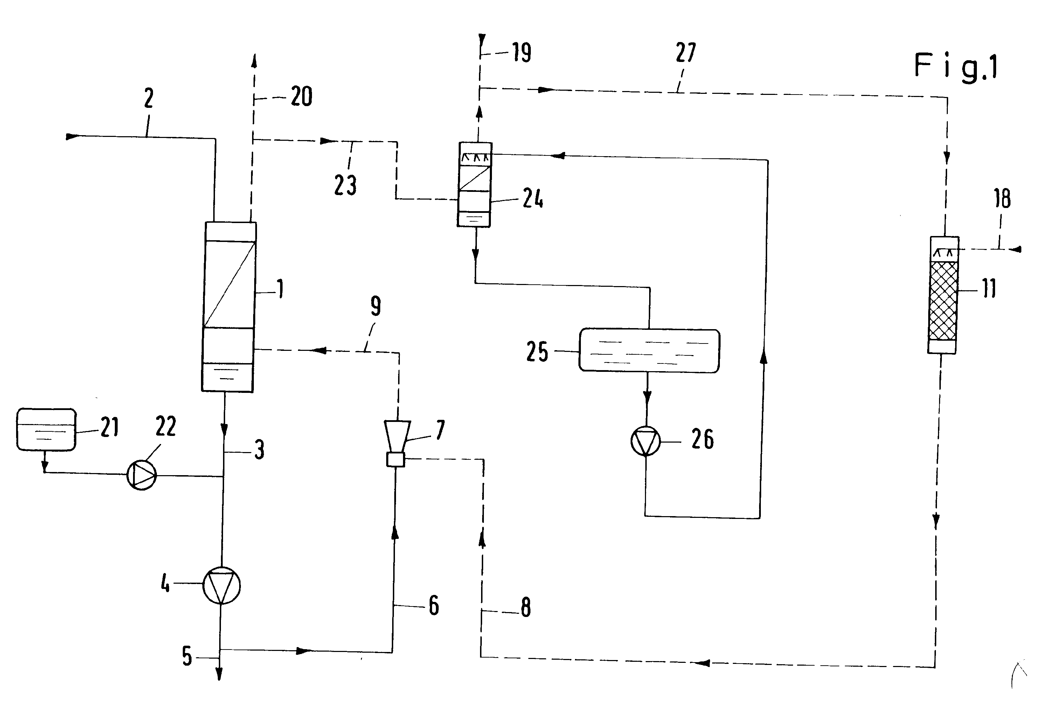

Die Fig. 1 zeigt eine Anlage mit einer Gegenstromkolonne 1 als Kontaktvorrichtung. Diese Kolonne kann in bekannter Weise Packungskörper aufweisen, wie sie z.B. in den schweizerischen Patentschriften 398503 und 617357 beschrieben sind oder eine Füllkörperschüttung, die beispielsweise aus Raschigringen besteht.

Das oxidierte und chlorierte Meerwasser, das beispielsweise einen Sauerstoffgehalt von ca. 10 ppm und eine Temperatur von ca. 8°C aufweist, wird bei einem Druck von ca. 4 bis 20 bar durch eine Leitung 2 in die Kolonne 1 eingeleitet. Dem durch die Leitung 2 eingeleiteten Meerwasser wird zuvor in nicht dargestellter Weise ein Chlorierungsmittel, wie NaOCl zudosiert. Diese Leitung enthält ausserdem einen nicht dargestellten Filter, der ohne Chlorierung verstopfen würde. In der Kolonne 1 wird das chlorierte Meerwasser bis zu ca. 10 ppb desoxidiert und durch eine Leitung 3 einer Hochdruckpumpe 4 zugeführt, in welcher das Meerwasser auf den erforderlichen Injektionsdruck von beispielsweise 100 bis 250 bar gebracht wird. Durch eine Leitung 5 wird sodann das Hochdruck-Meerwasser in ein Bohrloch injiziert. In den, die Kolonne 1 verlassenden, desoxidierten Wasserstrom wird Chlor eingespritzt. Dieses geschieht durch eine Einrichtung, die aus einem Behälter 21 besteht, welcher gelöstes NaOCl enthält und aus einer Dosierpumpe 22. Mit dieser zusätzlichen Einspritzung wird als erstes sichergestellt, dass das durch die Leitung injizierte Wasser in erforderlichem Masse chloriert ist. Ein kleiner Teilstrom des chlorierten Hochdruck-Wassers wird durch eine Leitung 6 als Treibstrahl einer im Kreislauf des Stripgases angeordneten Strahlpumpe 7 zugeführt. Diese Strahlpumpe saugt durch eine Leitung 8 weitgehend von Sauerstoff befreites Stripgas an und presst dieses durch eine Leitung 9 in die Kolonne 1. In der Kolonne 1 wird der Sauerstoff des Meerwassers weitgehend von dem Stripgas extrahiert. Ausserdem wird durch das als Treibstrahl benutzte chlorierte Meerwasser eine Sättigung des Stripgases mit Chlor bewirkt. Gegenüber anderen Begasungseinrichtungen, z.B. indem man das Stripgas durch ein Bad mit Chlor leiten würde, hat die Strahlpumpe 7 den Vorteil, eine Druckerhöhung zu erzeugen. Aufgrund der Sättigung des Stripgases mit Chlor wird eine Entchlorierung des chlorierten Meerwassers in der Kolonne 1 weitgehend reduziert. Das Stripgas, das die Kolonne 1 verlässt und mit Chlor und Sauerstoff beladen ist, wird durch eine Leitung 23 in eine Absorptionsvorrichtung 24 eingeleitet und mit einem flüssigen Absorptionsmittel in Kontakt gebracht. Die Vorrichtung 24 kann beispielsweise eine Gegenstromkolonne oder auch ein statischer Mischer sein, der von dem Absorptionsmittel und dem Stripgas im Gleichstrom durchsetzt wird. Es kann auch irgend eine andere Absorptionsvorrichtung bekannter Bauart eingesetzt werden. Das mit Chlor beladene Absorptionsmittel wird aus einem Vorratsbehälter 25 mittels einer Pumpe 26 in die Absorptionskolonne 24 rezirkuliert. Das chlorfreie Stripgas wird durch eine Leitung 27 in das Katalysatorbett 11 eingeleitet.

Diese im Absorptionsmittelkreislauf zirkulierende Absorptionsmittellösung wird im vorliegenden Fall nicht regeneriert. Der Inhalt des Vorratsbehälters 25 wird so dimensioniert, dass die Konzentration der absorbierenden Lösung für eine lange Betriebszeit, z.B. drei Monate, genügend hoch bleibt. Um den Behälter 25 klein und leicht auslegen zu können, ist es erforderlich, den Verbrauch des Absorptionsmittels klein zu halten. Erfindungsgemäss wird ein solches Absorptionsmittel ausgewählt, welches nur mit Chlor, jedoch nicht mit anderen Komponenten des Stripgases reagiert. Da nur Spuren von Chlor, z.B. von ca. 0,5 ppm im Stripgas vorhanden sind, wird der Verbrauch hierdurch äusserst gering gehalten.

Andere Komponenten des Stripgases, die mit Absorptionsmittellösungen reagieren könnten, sind Kohlendioxid und Sauerstoff, die beide in einer Konzentration von beispielsweise 1000 bis 50000 ppm im Stripgas vorhanden sind, würden das Absorptionsmittel sehr rasch verbrauchen.

Erfindungsgemäss werden als Absorptionsmittel nur solche gelöste Salze verwendet, die selektiv Chlor absorbieren. Beispiele für derartige Absorptionsmittel sind im Kennzeichen der Ansprüche 2 und 4 angegeben.

Die verbrauchte Absorptionsmittellösung wird am Ende einer verhältnismässig langen Betriebsperiode von einigen Monaten gegen eine neue Charge ausgewechselt. Das von Chlor befreite Stripgas wird, wie bereits erwähnt, durch eine Leitung 27 in ein Katalysatorbett 11 eingeleitet. Im Ausführungsbeispiel wird über eine Leitung 18 als Brenngas eine geregelte Menge von Erdgas zugeführt. In der Vorrichtung 11 wird das Stripgas weitgehend von Sauerstoff befreit und verlässt das Katalysatorbett durch Leitung 8.

Die Verbrennung von Kohlenwasserstoffen (Leitung 18) produziert Kohlendioxid, und ohne weitere Massnahmen würde die Kohlendioxid-Konzentration im Stripgas wesentlich steigen, da die Entsorgung durch Löslichkeit im deoxidierten Wasser gering ist. Damit würde das Wasser auch eine zu hohe Kohlendioxid-Konzentration aufweisen.

Um die Konzentration von Kohlendioxid im Kreislauf auf eine andere Weise zu begrenzen, ist es erforderlich, einen Teil des Stripgases durch die Leitung 20 abzublasen. Dieser Gasverlust und weitere Verluste, die aus der auch noch vorhandenen Löslichkeit von Kohlendioxid im deoxidierten Wasser entstehen, bewirken eine Verminderung des Druckes im Stripgaskreislauf. Um den Druck in diesem Kreislauf konstant zu halten, ist es erforderlich, zusätzlich Erdgas durch die Leitung 18 zuzuführen, oder zusätzlich Stickstoff oder Luft durch eine Leitung 19 in den Kreislauf einzuspeisen. Im letzteren Fall wird der Sauerstoff aus der Luft im Katalysatorbett 11 verbrannt.

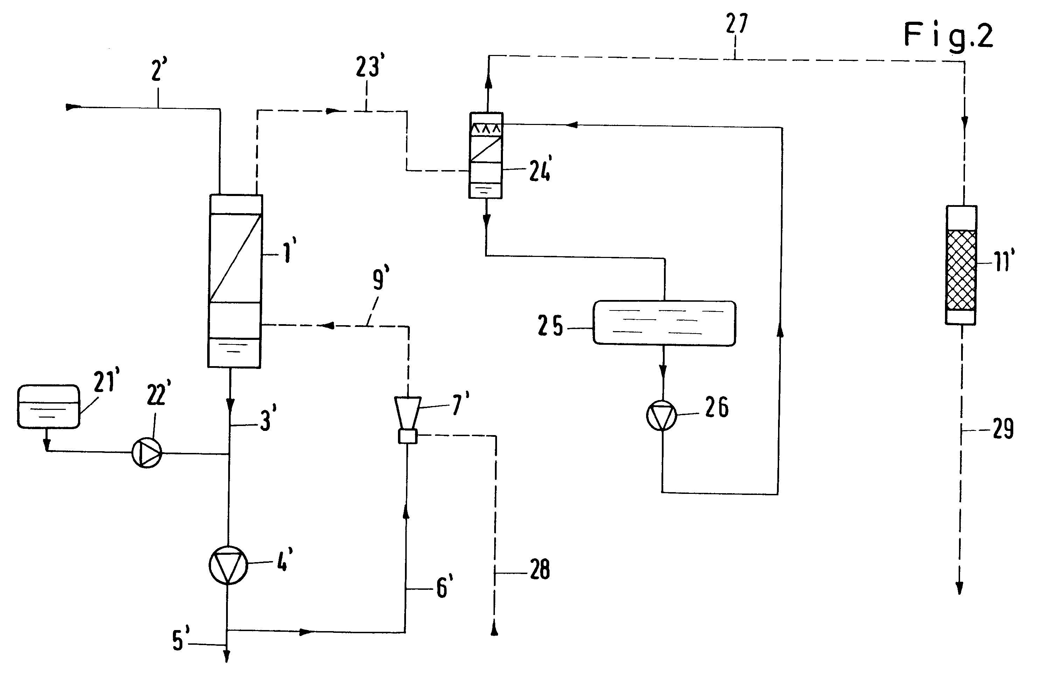

Die Fig. 2 zeigt ein Fliesschema einer Anlage zum Desoxidieren und Entchloren des Stripgases, die sich dadurch von der in Fig. 1 dargestellten Ausführungsform unterscheidet, dass das Stripgas nicht in einem geschlossenen Kreislauf zirkuliert, sondern von einer ausserhalb der Anlage sich befindenden Quelle der Anlage zugeführt, und nachdem es die Desoxidierungsstufe, die Entchlorierungsstufe und schliesslich die Katalysatorstufe durchlaufen hat, einem weiteren Verwendungszweck, wie z.B. nach Kompression einer Gasturbine zugeführt oder in eine Pipeline oder ein Bohrloch gefördert wird.

Zur Vermeidung von Wiederholungen sind die mit der Fig. 1 übereinstimmenden Anlagenelemente und Leitungen mit den gleichen Bezugsziffern bezeichnet und mit einem Apostroph versehen.

Im vorliegenden Fall saugt die Strahlpumpe 7' sauerstoff- und chlorfreies Erdgas aus einer Fremdquelle durch eine Leitung 28 an. Eine Funktion der Strahlpumpe 7' besteht darin, das als Stripgas dienende Erdgas so zu komprimieren, dass der Druck in der Ableitung 29 dem Eintrittsdruck des Erdgases vor der Strahlpumpe 7' entspricht.

Ein höherer Kompressionsdruck, welcher den Druckabfall in der Kolonne 1', in der Waschkolonne 24' und in dem Katalysator 11' überschreitet, ist von Vorteil, falls die Auslegung der Strahlpumpe und die Energie des Treibstrahles (Leitung 6') dieses ermöglichen.

Mit Sauerstoff und Chlor beladenes Stripgas verlässt die Kolonne 1' durch eine Leitung 23'.

Die Waschkolonne 24' hat die Aufgabe, den Chlor aus dem Stripgas zu entfernen, wie dieses im einzelnen anhand der Fig. 1 beschrieben worden ist. Grundsätzlich ist natürliches Erdgas zwar chlorfrei, jedoch wird aufgrund der Entchlorung des Wassers in der Kolonne 1' eine Chlorierung des Ergases erfolgen.

Im vorliegenden Fall ist meistens eine Katalysatoreinrichtung 11' nicht immer zwingend, weil Brennstoff mit einem tiefen Sauerstoff-Gehalt von z.B. 0,7 % für eine Gasturbine geeignet ist. In einem solchen Fall ist die Chlorentfernung aus dem Stripgas für den Schutz der nachgeschalteten Apparate erforderlich.

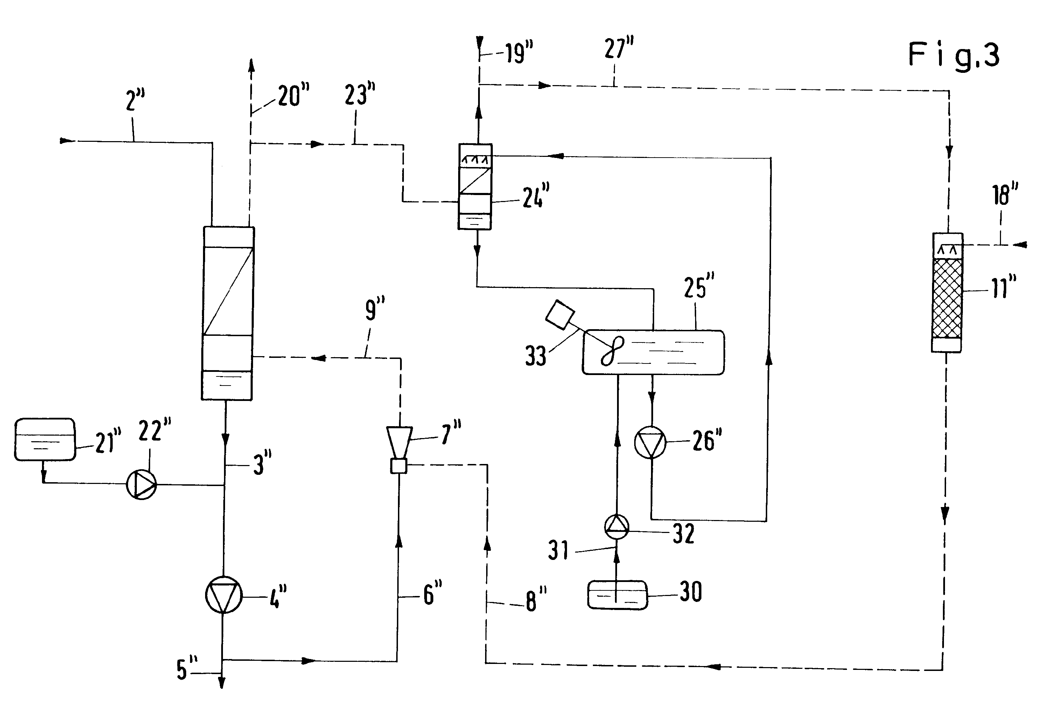

Die Fig. 3 stimmt im wesentlichen mit der in Fig. 1 dargestellten Anlage überein bis auf eine abgewandelte, verbesserte Ausführungsform des Absorptionsmittelkreislaufes. Die mit Fig. 1 übereinstimmenden Anlagenelemente sind mit den gleichen Bezugsziffern bezeichnet und mit einem ″″ versehen.

Ausserdem sei schon jetzt erwähnt, dass diese Ausführung des Absorptionsmittelkreislaufes selbstverständlich auch bei einer Anlage, wie sie in Fig. 2 dargestellt ist, vorteilhaft angewendet werden kann.

Im in der Fig. 3 dargestellten Absorptionsmittelkreislauf ist zusätzlich noch ein im Vergleich zum Behälter 25″ kleinerer Behälter 30 angeordnet, aus welchem eine Einspeiseleitung 31 mit einer Dosierpumpe 32 in den Behälter 25″ führt. In letzterem ist ein Rührer 33 angeordnet.

Im Ausführungsbeispiel enthält das wässrige Absorptionsmittel beim Anfahren Kaliumjodid und L-Ascorbinsäure. Das Kaliumjodid reagiert in der Absorptionsmittelkolonne 24″ mit Chlor und bildet Kaliumchlorid und Jod. Das Jod reagiert mit L-Ascorbinsäure und bildet Jodsäure und Dehydro-L-Ascorbinsäure. Diese zweite Reaktion hat den Vorteil, dass Jodsäure eine wesentlich höhere Löslichkeit hat als Jod.

Ein weiterer Vorteil besteht darin, dass das im ersten Verfahrensschritt verbrauchte Kaliumjodid wiederhergestellt werden kann, und zwar dadurch, dass man aus dem kleineren Vorratsbehälter mittels einer Dosierpumpe 32 in den Vorratsbehälter 25″ eine alkalische Lösung einspeist. Die alkalische Lösung enthält auch Kalium. Das kaliumhaltige, alkalische Lösungsmittel reagiert mit der im grossen Behälter 25″ enthaltenen Jodsäure und bildet Kaliumjodid und Wasser. Hierdurch wird das verbrauchte Kaliumjodid ersetzt.

Die Anlage verbraucht in diesem Fall nur alkalische Salze, z.B. Kaliumlauge oder Kaliumcarbonat, die bekanntlich billig sind. Das gleiche gilt auch für die L-Ascorbinsäure. In dem Lösungsmittel entstehen als Abfallprodukte Kaliumchlorid und Dehydro-L-Ascorbinsäure, die sich im Absorptionskreislauf ansammeln, aber nur in Mengen, die dem absorbierten Chlor entsprechen. Nach längerer Zeit wird das absorbierende Lösungsmittel ersetzt. Kaliumjodid, das ein sehr teures Mittel ist, wird nicht verbraucht und kann aus der entnommenen Lösung zurückgewonnen werden. Die Dosierung des alkalischen, kaliumhaltigen Lösungsmittels wird so geregelt, dass der pH-Wert der wässrigen Lösung konstant gehalten wird oder periodisch durch kontinuierliche oder periodische Zugabe von einer, das alkalische Metall enthaltenden Lösung korrigiert wird. Diese Regelung kann vollständig automatisiert werden, was insbesondere auch für Plattformen von grossen Vorteil ist, da keine weiteren Laboranalysen erforderlich sind.

Ausserdem hat diese Ausführungsform den Vorteil, dass die kaliumhaltige, alkalische Lösung nie mit Kohlendioxid in Kontakt kommt.

Wenn es auch von besonderen Vorteil ist, die Erfindung für sich unterhalb des Meeresgrundes befindenden Oelquellen anzuwenden, wie in der Beschreibungseinleitung ausgeführt wird, so umfasst die Erfindung auch auf dem Festland installierte Anlagen, die zur Oelförderung aus Oelquellen dienen, die sich unterhalb der Erdoberfläche befinden. In diesem Fall kann als Fördermittel gegebenenfalls auch Süsswasser dienen, welches vor der Injektion in die Oelquellen ebenfalls desoxidiert und chloriert werden muss.

**Patentansprüche**

1. Verfahren zum Desoxidieren von chloriertem Wasser, insbesondere von Meerwasser, mittels eines sauerstoffarmen Stripgases, welches, nachdem es mit dem Wasser in Kontakt gebracht worden ist, mit Hilfe eines flüssigen Absorptionsmittels entchlort wird, **dadurch gekennzeichnet**, dass das Absorptionsmittel die Komponenten Kohlendioxid, Sauerstoff und Kohlenwasserstoffe nicht absorbiert und einen geschlossenen Kreislauf durchläuft, in welchem es mit dem, mit Sauerstoff und Chlor beladenen Stripgas in Kontakt gebracht und aus einem, im Kreislauf angeordneten Vorratsbehälter gespeist wird, wobei das Absorptionsmittel eine wässrige Lösung ist, welche ein Bromid oder ein Jodid von einem Alkalimetall und ein Oxidationsmittel enthält, und dass das Bromid oder das Jodid zuerst mit Chlor reagiert, indem ein Chlorid von dem alkalischen Metall und Jod oder Brom gebildet werden, und dass anschliessend Jod oder Brom mit einem Oxidationsmittel reagiert, um Jod- oder Bromsäure zu bilden, und dass der pH-Wert der wässrigen Lösung konstant gehalten oder periodisch durch kontinuierliche oder periodische Zugabe von einer, das alkalische Metall enthaltenden Lösung korrigiert wird, die durch Reaktion mit der Jod- oder Bromsäure wieder das Bromid oder das Jodid des Alkalimetalles bildet.

2. Verfahren nach Anspruch 1, dadurch gekennzeichnet, dass das Alkalimetall Kalium oder Natrium ist.

3. Verfahren nach Anspruch 1, dadurch gekennzeichnet, dass das Oxidationsmittel Ascorbinsäure ist.

4. Verfahren nach Anspruch 1, dadurch gekennzeichnet, dass die alkalische Lösung aus Kalilauge, Natronlauge, Kaliumcarbonat, Kaliumbicarbonat, Natriumcarbonat oder Natriumbicarbonat besteht.

**Claims**

1. A process for the deoxidisation of chlorinated water, more particularly seawater, by means of a lowoxygen stripping gas which, after it has been brought into contact with the water, is dechlorinated by means of a liquid absorbent, characterised in that the absorbent does not absorb the components carbon dioxide, oxygen and hydrocarbons and circulates in a closed circuit in which it is brought into contact with the stripping gas charged with oxygen and chlorine and is fed from a reservoir contained in the circuit, the absorbent being an aqueous solution which contains a bromide or an iodide of an alkali metal and an oxidising agent, and in that the bromide or the iodide first reacts with chlorine to form a chloride of the alkali metal and iodine or bromide and in that iodine or bromine then reacts with an oxidising agent to form iodic or bromic acid, and in that the pH of the aqueous solution is kept constant or is periodically corrected by continuous or periodic addition of a solution containing the alkali metal, such solution again forming the bromide or iodide of the alkali metal by reaction with the iodic or bromic acid.

2. A process according to claim 1, characterised in that the alkali metal is potassium or sodium.

3. A process according to claim 1, characterised in that the oxidising agent is ascorbic acid.

4. A process according to claim 1, characterised in that the alkaline solution consists of caustic potash solution, caustic soda solution, potassium carbonate, potassium bicarbonate, sodium carbonate or sodium bicarbonate.

## Revendications

1. Procédé de désoxygénation d'eau chlorée, notamment d'eau de mer, au moyen d'un gaz de strippage pauvre en oxygène qui, après avoir été mis en contact avec l'eau, est déchloré à l'aide d'un agent d'absorption liquide, caractérisé en ce que l'agent d'absorption n'absorbe pas les composants que sont l'anhydride carbonique, l'oxygène et les hydrocarbures et traverse un circuit fermé, dans lequel il est mis en contact avec le gaz de strippage chargé d'oxygène et de chlore et provient d'un réservoir placé dans le circuit, l'agent d'absorption étant une solution aqueuse qui contient un bromure ou un iodure d'un métal alcalin et un agent d'oxydation, et en ce que le bromure ou l'iodure réagit tout d'abord avec le chlore en formant un chlorure du métal alcalin et de l'iode ou du brome, et en ce qu'ensuite l'iode ou le brome réagit avec un agent d'oxydation pour former l'acide iodique ou l'acide bromique, et en ce que le pH de la solution aqueuse est maintenu constant ou corrigé périodiquement par addition continue ou périodique d'une solution contenant le métal alcalin, laquelle solution forme par réaction avec l'acide iodique ou bromique à nouveau le bromure ou l'iodure du métal alcalin.

2. Procédé selon la revendication 1, caractérisé en ce que le métal alcalin est du potassium ou du sodium.

3. Procédé selon la revendication 1, caractérisé en ce que l'agent d'oxydation est de l'acide ascorbique.

4. Procédé selon la revendication 1, caractérisé en ce que la solution alcaline est constituée par de la potasse caustique, de la soude caustique, du carbonate de potassium, du bicarbonate de potassium, du carbonate de sodium ou du bicarbonate de sodium.

Fig.1

EP 0 329 601 B1

Fig.2

EP 0 329 601 B1

Fig.3

EP 0 329 601 B1